# EUROPEAN PATENT APPLICATION

(11) **EP 1 736 492 A1**
(43) Date of publication of application: **27.12.2006**
(21) Application number: 06011906.2
(22) Date of filing: 09.06.2006
(51) Int. Cl.: C08G 18/73, C08G 18/67, C09D 175/16

(54) **Low viscosity, ethylenically-unsaturated polyurethanes**

(30) Priority: 24.06.2005 US 165681
(71) Applicant: Bayer MaterialScience LLC, Pittsburgh PA 15205 (US)
(72) Inventor: Kinney, Carol L., Eighty Four PA 15330 (US); Gambino, Charles A., McDonald PA 15057 (US); Dvorchak, Michael J., Monroeville PA 15146 (US); Shaffer, Myron W., New Cumberland WV 23047 (US)
(74) Representative: Bailly, Peter

(57) **Abstract**

The present invention relates to low viscosity, ethylenically-unsaturated polyurethanes which are substantially free from isocyanate groups, are liquid at 25°C, have a total content of ethylenically unsaturated groups (calculated as C=C, MW 24) of 1 to 12% by weight and contain the reaction product of
A) 4-isocyanatomethyl-1,8-octamethylene diisocyanate (NTI) with
B) a hydroxyl component comprising
i) 5 to 100 hydroxyl equivalent % of one or more hydroxy functional lactone ester (meth)acrylates having a number average molecular weight of about 200 to 1000 and having the formula:

CH₂=C(R¹)-C(O)-O-R²-[O-C(O)-R³]ₙ-OH

wherein n is an integer from 1 to 5, R¹ is hydrogen or methyl, R² represents an alkylene group or substituted alkylene group having 2 to 10 carbon atoms, which may be substituted with one or more alkyl groups having from 1 to 12 carbon atoms, and R³ represents a straight or branched chain alkylene group having 3 to 8 carbon atoms, which may be substituted with one or more alkyl groups having 1 to 12 carbon atoms,
ii) up to 95 hydroxyl equivalent % of a monohydroxy-functional, ethylenically unsaturated compound other than B-i), and
iii) up to 20 hydroxyl equivalent % of a saturated hydroxyl compound or an unsaturated hydroxyl compound other than B-i) or B-ii).,

wherein i) the hydroxyl equivalent %'s of components B-i), B-ii) and B-iii) add up to 100 %, based on the total weights of components B-i), B-ii) and B-iii) and ii) the NCO:OH equivalent ratio of component A) to component B) is 1.10:1 to 1:1.10.

The present invention also relates to a one-component coating composition containing these ethylenically unsaturated polyurethanes.

## Description

### BACKGROUND OF THE INVENTION

### Field of the Invention

The present invention relates to ethylenically unsaturated polyurethanes, which are liquid at 25°C, and to the use of these polyurethanes as binders in one-component coating compositions.

### Description of the Prior Art

Aliphatic polyurethanes that contain acryioyi groups are known and described in U.S. Patents 5,128,432, 5,136,009, 5,300,615, 5,777,024, 5,854,301 and 6,306,504. U.S. Patent 5,128,432 is directed to the preparation of liquid urethane acrylates from monomeric diisocyanates, such as 1,6-hexamethylene diisocyanate (HDI) or isophorone diisocyanate (IPDI). To avoid the formation of solid products, it is necessary to react the monomeric diisocyanate with a mixture of hydroxyalkyl acrylates, a mono-functional alcohol containing ester groups (such as trimethylol-propane (TMP) diacetate or diacrylate, which may optionally be alkoxylated) and a saturated, polyhydric alcohol such as TMP.

U.S. Patent 5,136,009 is directed to the preparation of urethane acrylates from trimethyl-HDI by reacting this diisocyanate with a mixture of hydroxyalkyl acrylates and saturated, polyhydric alcohols such as TMP. U.S. Patent 5,300,615 discloses that the urethane acrylates from U.S. Patent 5,128,432 become turbid at less than 10°C. This problem is overcome by reacting a mixture of HDI and IPDI with a mixture of hydroxyalkyl acrylates, an alkoxylated monofunctional alcohol containing ester groups (such as TMP diacetate or diacrylate, which is alkoxylated), a branched, saturated, mono or dihydric alcohol and optionally a linear, saturated mono or dihydric alcohol.

U.S. Patent 5,777,024 is directed to the reaction product of a low viscosity HDI trimer, which has been modified with allophanate groups to reduce its viscosity, with hydroxy-functional olefinic compounds such as hydroxyalkyl (meth)acrylates and lactone modified versions of these (meth)acrylates. One difficulty with the resulting products is that they have to be filtered to remove crystals resulting in an additional process step and a reduced yield.

U.S. Patent 6,306,504 is directed to a coating composition for polycarbonate which contains the reaction product of a low viscosity polyisocyanate, such as a low viscosity HDI trimer, with a low molecular weight hydroxyalkyl acrylate, such as hydroxyethyl acrylate or hydroxypropyl acrylate. The composition also contains a bis-acrylate as a reactive diluent, which lowers the viscosity of the final composition.

A disadvantage of the compositions described in the U.S. patents is that they are too viscous for use in solvent-free, one-component coating compositions. Attempts to lower the viscosity by directly reacting monomeric diisocyanates, such as HDI, with low molecular weight hydroxyalkyl acrylates results in the formation of solid or extremely viscous products. Attempts to use low viscosity polyisocyanates, such as the HDI trimer described in U.S. Patent 6,306,504, also results in the formation of the high viscosity products in the absence of a reactive diluent, or results in the formation of crystals that must be filtered as described in U.S. Patent 5,777,024.

U.S. Patent 5,854,301 is directed to the reaction product of 4-isocyanatomethyl-1 ,8-octamethylene diisocyanate (NTI) with a hydroxyalkyl (meth)acrylate. This product overcomes some of the difficulties associated with the ethylenically unsaturated polyurethanes described in the prior art. However, even though this product has a low viscosity, it is still necessary to further reduce the viscosity due to increased governmental regulations regarding the presence of solvents and reactive diluents.

Accordingly, it is an object of the present invention to provide ethylenically unsaturated polyurethanes which do not suffer from the disadvantages of the prior art. It is an additional object of the present invention to provide ethylenically unsaturated polyurethanes that are suitable for use as binders for one-component coating compositions and have an acceptably low viscosity without the need for organic solvents and reactive diluents that are environmentally objectionable and regulated by the government.

These objects may be achieved with the ethylenically unsaturated polyurethanes according to the present invention, which are described in detail hereinafter. The fact that it was possible to reduce the viscosity of the ethylenically unsaturated polyurethanes disclosed in U.S. Patent 5,854,301 is surprising because the hydroxy-functional ethylenically unsaturated compounds used in accordance with the present invention have a higher molecular weight than those described in the U.S. patent and, thus, would be expected to result in polyurethanes having a higher viscosity.

### SUMMARY OF THE INVENTION

The present invention relates to low viscosity, ethylenically-unsaturated polyurethanes which are substantially free from isocyanate groups, are liquid at 25°C, have a total content of ethylenically unsaturated groups (calculated as C=C, MW 24) of 1 to 12% by weight and contain the reaction product of
A) 4-isocyanatomethyl-1 ,8-octamethylene diisocyanate (NTI) with
B) a hydroxyl component containing
   i) 5 to 100 hydroxyl equivalent % of one or more hydroxy-functional lactone ester (meth)acrylates having a number average molecular weight of about 200 to 1000 and having the formula:

      CH₂=C(R¹)-C(O)-O-R²-[O-C(O)-R³]ₙ-OH

      wherein
      - n: is an integer from 1 to 5,
      - R¹: is hydrogen or methyl,
      - R²: represents an alkylene group or substituted alkylene group having 2 to 10 carbon atoms, which may be substituted with one or more alkyl groups having from 1 to 12 carbon atoms, and
      - R³: represents a straight or branched chain alkylene group having 3 to 8 carbon atoms, which may be substituted with one or more alkyl groups having from 1 to 12 carbon atoms,
   ii) up to 95 hydroxyl equivalent %, based on the total hydroxyl equivalents of component B), of a monohydroxy-functional, ethylenically unsaturated compound other than B-i), and
   iii) up to 20 hydroxyl equivalent %, based on the total hydroxyl equivalents of component B), of a saturated hydroxyl compound
   or an unsaturated hydroxyl compound other than B-i) or B-ii),
   wherein i) the hydroxyl equivalent %'s of components B-i), B-ii) and B-iii) add up to 100 %, based on the total weights of components Bi), B-ii) and B-iii) and ii) the NCO:OH equivalent ratio of component A) to component B) is 1.10:1 to 1:1.10.

The present invention also relates to a one-component coating composition containing these ethylenically unsaturated polyurethanes.

### DETAILED DESCRIPTION OF THE INVENTION

The low viscosity, ethylenically unsaturated polyurethanes are based on the reaction product of 4-isocyanatomethyl-1,8-octamethylene diisocyanate (NTI) with a hydroxyl component containing one or more hydroxy-functional lactone ester (meth)acrylates having a number average molecular weight of about 200 to 1000, preferably 200 to 700 and more preferably 200 to 500, and corresponding to the formula

CH₂=C(R¹)-C(O)-O-R²-[O-C(O)-R³]ₙ-OH

wherein
- n: is an integer from 1 to 5, preferably 1 or 2 and more preferably 2,
- R¹: is hydrogen or methyl, preferably hydrogen,
- R²: represents an alkylene group or substituted alkylene group having from 2 to 10 carbon atoms, preferably 2 to 4 carbon atoms and more preferably 2 carbon atoms; which may be substituted with one or more alkyl groups having from 1 to 12 carbon atoms, preferably one alkyl group and more preferably one methyl group, and
- R³: represents a straight or branched chain alkylene group having 3 to 8 carbon atoms, preferably 5 carbon atoms; which may be substituted with one or more alkyl groups having from 1 to 12 carbon atoms, but preferably is unsubstituted.

Suitable hydroxy-functional lactone ester (meth)acrylates are known in the art. The esters (hereinafter "lactone-acrylate adducts") are prepared by reacting an appropriate lactone with an acrylate or methacrylate acid ester.

Lactones employed in the preparation of the lactone-acrylate adducts typically have the formula: 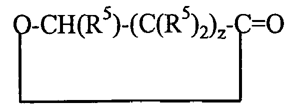 wherein
- R⁵: is hydrogen or an alkyl group having 1 to 12 carbon atoms, and
- z: is 2 to 7.

Preferred lactones are the ∈-caprolactones wherein z is 4 and at least 6 of the R⁵'s are hydrogen with the remainder, if any, being alkyl groups. Preferably, none of the substituents contain more than 12 carbon atoms and the total number of carbon atoms in these substituents on the lactone ring does not exceed 12. Unsubstituted ∈-caprolactone, i.e.,
wherein each R⁵ is hydrogen, is a derivative of 6-hydroxyhexanoic acid. Both the unsubstituted and substituted ∈-caprolactones are available by reacting the corresponding cyclohexanone with an oxidizing agent such as peracetic acid.

Substituted ∈-caprolactones found to be most suitable for preparing the present lactone-acrylate adducts are the various ∈-monoalkylcapro-lactones wherein the alkyl groups contain from 1 to 12 carbon atoms, e.g., ∈-methyl-caprolactone, ∈-ethyl-caprolactone, ∈-propyl-caprolactone and ∈-dodecyl-caprolactone. Also suitable are the ∈-dialkylcaprolactones in which the two alkyl groups are substituted on the same or different carbon atoms, but not both on the omega carbon atoms.

Also suitable are the ∈-trialkylcaprolactones wherein 2 or 3 carbon atoms in the lactone ring are substituted provided, though, that the omega carbon atom is not di-substituted. The most preferred lactone starting reactant is the ∈-caprolactone wherein z in the lactone formula is 4 and each R⁵ is hydrogen.

The acrylate or methacrylate acid esters utilized to prepare the lactone-acrylate adducts contain from 1 to 3, preferably 1, acrylyl or α-substituted acrylyl groups and one hydroxyl group. Such esters are commercially available and/or can be readily synthesized. Commercially available esters include the hydroxyalkyl acrylates or hydroxyalkyl methacrylates wherein the alkyl group contains 2 to 10 carbon atoms, preferably 2 to 4 carbon atoms. The hydroxyalkyl acrylates and methacrylates have the following formula:

CH₂=CR¹-C(O)O-R²-OH

wherein R¹ is hydrogen or methyl and R² is a linear or branched alkylene group having 2 to 10 carbon atoms, preferably 2 to 4 carbon atoms.

Examples of suitable hydroxyalkyl (meth)acrylates include 2-hydroxyethyl acrylate, 2-hydroxypropyl acrylate, 3-hydroxypropyl acrylate, 2-hydroxybutyl acrylate, 4-hydroxybutyl acrylate, 3-hydroxypentyl acrylate, 6-hydroxynonyl acrylate, 2-hydroxyethyl methacrylate, 2-hydroxypropyl methacrylate, 3-hydroxypropyl methacrylate, 2-hydroxybutyl methacrylate, 2-hydroxypentyl methacrylate, 5-hydroxypentyl methacrylate, 7- hydroxyheptyl methacrylate and 5-hydroxydecyl methacrylate.

Preferred lactone-acrylate adducts have the formula:

CH₂=CR¹-C(O)O-R²-(O-C(O)R³)₂-OH

wherein R¹, R², and R³ are as described above.

The lactone-acrylate adduct B-i) is prepared by reacting the lactone with the hydroxyalkyl (meth)acrylate in the presence of less than about 200 parts per million of a catalyst. The catalysts which may be used include one or more organometallic compounds and other metallic compounds such as stannic chloride or ferric chloride and other Lewis or protonic acids. Preferred catalysts include stannous octoate, dibutyltin dilaurate, and other tin compounds; and titanates such as tetraisopropyl titanate and butyl titanate.

The reaction can be carried out at a temperature of about 100°C to 400°C, preferably about 120°C to 130°C. The reaction may be carried out at atmospheric pressure, although higher or lower pressures may be used. The reaction is generally carried out in the presence of oxygen to inhibit polymerization of the hydroxyalkyl (meth)acrylate. The reaction is generally carried out for a period of about 2 to 20 hours. The molar ratio of lactone to hydroxyl groups in the ester is about 1:0.1 to 1:5, preferably about 1:0.3 to 1:3.

The reaction is carried out in the presence of a suitable inhibitor to prevent polymerization of the hydroxyalkyl acrylate double bond. Suitable inhibitors include the monomethyl ether of hydroquinone, benzoquinone, phenothiazine, methyl hydroquinone, 2,5-di-t-butylquinone, hydroquinone, benzoquinone and other common free radical inhibitors known in the art. The level of inhibitor used is less than 1000 parts per million, preferably less than 800 parts per million, and more preferably less than 600 parts per million.

An example of a lactone-acrylate adduct preferred for use in the present invention is a caprolactone-2-hydroxyethyl acrylate adduct supplied by Dow under the tradename TONE M-100, which has the formula

CH₂=CH-C(O)O-CH₂-CH₂-(O-C(O)(CH₂)₅)₂-OH.

While in a preferred embodiment of the invention the lactone-acrylate contains two molecules of lactone, on the average, per acrylate group, useful products can have from one to five lactone units per acrylate group, or can be a mixture of compounds that contain from one to five lactone units. In addition to ∈-caprolactone, the lactone units could be derived from other lactones such as beta-propiolactone, delta-valerolactone, delta-butyrolactone, zeta-enantholactone, and etacaprylolactone, or substituted lactones such as 6-methyl-∈-caprolactone, 3-methyl-∈-epsilon-caprolactone, 5-methyl- ∈-caprolactone, 4-methyl-deltavalerolactone, and 3,5-dimethyl- ∈-caprolactone.

Hydroxy-functional lactone ester (meth)acrylates B-i) are present in an amount of 5 to 100 hydroxyl equivalent %, preferably 30 to 100 hydroxyl equivalent % and more preferably 50 to 100 hydroxyl equivalent %, based on the total hydroxyl equivalents of component B). While the hydroxy-functional lactone ester (meth)acrylates may be used alone to react with NTI, up to 95 hydroxyl equivalent %, preferably up to 70 hydroxyl equivalent % and more preferably up to 50 hydroxyl equivalent %, based on the total hydroxyl equivalents of component B), of other monohydroxy-functional, ethylenically unsaturated compounds B-ii) may also be used. When component B-ii) is present, it is preferably present in an amount of at least 10 hydroxyl equivalent %, more preferably at least 30 hydroxyl equivalent % and most preferably at least 50 hydroxyl equivalent %, based on the total hydroxyl equivalents of component B).

Examples of monohydroxy-functional, ethylenically unsaturated compounds B-ii) include the hydroxylalkyl (meth)acrylates previously described as suitable for preparing the lactone-acrylate adducts B-i); alkoxylation products of these hydroxyalkyl (meth)acrylates, preferably with propylene or ethylene oxide; reaction products of (meth)acrylic acid with excess quantities of higher functional saturated alcohols such as glycerol diacrylate, trimethylol propane diacrylate and pentaerythritol triacyrlate and the corresponding methacrylates; β,γ-ethylenically unsaturated ether alcohols, preferably having 5 to 14 carbon atoms and containing at least one, preferably at least two, β,γ-ethylenically unsaturated ether groups, such as allyl alcohol, glycerol diallyl ether, trimethylol propane diallyl ether and pentaerythritol triallyl ether; and hydroxyalkyl vinyl ethers such as 2-hydroxyethyl vinyl ether and 4-hydroxybutyl vinyl ether; and reaction products of (meth)acrylic acids with monoepoxide compounds.

Also suitable for use as hydroxyl component B) are hydroxyl compounds B-iii), which include saturated hydroxyl compounds and hydroxy-functional, ethylenically unsaturated compounds containing at least two hydroxyl groups. Hydroxyl compounds B-iii) are present in an amount of up to 20 hydroxyl equivalent %, preferably up to 10 hydroxyl equivalent % and more preferably up to 5 hydroxyl equivalent %, based on the total hydroxyl equivalents of component B).

Examples of saturated hydroxyl compounds include mono- to trihydric, preferably monohydric and dihydric, aliphatic alcohols having a number average molecular weight of 32 to 400, such as methanol, ethanol, n-hexanol, isooctanol, isododecanol, benzyl alcohol, ethylene glycol, diethylene glycol, propylene glycol, 2-ethyl-1,3-hexane diol, glycerol and alcohols obtained from these alcohols by alkoxylation. Examples of ethylenically unsaturated compounds containing at least two hydroxyl groups include trimethylol propane monoacrylate and monoallyl ether, and pentaerythritol diacrylate and diallyl ether.

To prepare the ethylenically-unsaturated polyurethane, NTI is typically heated to a temperature of about 40 to 90°C, generally about 60°C. At this time, a catalytic amount of a urethane catalyst, e.g., dibutyl tin dilaurate and/or an inhibitor may be added followed by addition of lactone-acrylate adduct B-i) and optionally hydroxyl components B-ii) and B-iii) at a rate which maintains the desired reaction temperature. The amounts of the reactants are selected such that the number of isocyanate groups of NTI to number of hydroxyl groups of hydroxyl component B) is essentially equivalent, i.e., the NCO:OH equivalent ratio is 1.10:1 to 1:1.10, preferably 1.05:1 to 1:1.05 and more preferably 1.02:1 to 1:1.02.

The reaction temperature is maintained for about 2 to 4 hours or until the NCO content is <0.5% by weight, preferably <0.3% by weight, as measured for example by titration with dibutyl amine. If the isocyanate content is too high, an additional amount of hydroxyl component B) can be added to react with any remaining isocyanate groups. Thereafter, the product is cooled prior to storage.

Further details for the production of the lactone esters and/or the reaction products of the lactone esters with isocyanates can be found in U.S. Patents 4,188,472, 4,340,497, 4,429,082, 4,504,635, 4,683,287, 6,465,539 and 6,534,128 (the disclosures of which are herein incorporated by reference), WO 97/04881, WO 03/027162, and German Offenlegungsschrift 2,914,982.

The ethylenically unsaturated polyurethanes according to the invention are substantially free from isocyanate groups and have a total content of ethylenically unsaturated groups of (calculated as C=C, MW 24) of 1 to 12%, preferably 2 to 10% and more preferably 3 to 10% by weight.

The ethylenically unsaturated polyurethanes preferably have a viscosity at 25°C of less than 15,000 mPa·s, more preferably less than 10,000 mPa·s. Preferably, these viscosities are obtained for the neat resins, i.e., in the absence of solvents or copolymerizable monomers.

Prior to their use in the coating compositions according to the invention the ethylenically unsaturated polyurethanes may be blended with known additives. Examples of these additives include wetting agents, flow control agents, antiskinning agents, antifoaming agents, matting agents, (such as silica, aluminum silicates and high-boiling waxes), viscosity regulators, pigments (including both organic and inorganic pigments), dyes, UV absorbers and stabilizers against thermal and oxidative degradation.

Other additives include organic solvents and/or copolymerizable monomers, preferably copolymerizable monomers. Examples of suitable solvents include those known from polyurethane coating technology such as toluene, xylene, cyclohexane, butyl acetate, ethyl acetate, ethyl glycol acetate, methoxypropyl acetate (MPA), acetone, methyl ethyl ketone and mixtures thereof.

Suitable copolymerizable monomers are selected from organic compounds which contain 1-4, preferably 2 to 4 ethylenically unsaturated groups, and preferably have a viscosity of not more than 1000, more preferably not more than 500 mPa.s at 23°C, such as di- and polyacrylates and di- and polymethacrylates of glycols having 2 to 6 carbon atoms and polyols having 3 to 4 hydroxyl groups and 3 to 6 carbon atoms.

Examples include ethylene glycol diacrylate, propane 1,3-diol diacrylate, butane 1,4-diol diacrylate, hexane 1,6-diol diacrylate, trimethylol-propane triacrylate, pentaerythritol tri- and tetraacrylate, and the corresponding methacrylates. Also suitable are di(meth)acrylates of polyether glycols of initiated with ethylene glycol, propane 1,3-diol, butane 1,4-diol; triacrylates of the reaction products of 1 mole of trimethylol-propane with 2.5 to 5 moles of ethylene oxide and/or propylene oxide; and tri- and tetraacrylates of the reaction products of 1 mole of pentaerythritol with 3 to 6 moles of ethylene oxide and/or propylene oxide. Other copolymerizable monomers include aromatic vinyl compounds such as styrene; vinyl alkyl ethers such as vinylbutyl ether or triethylene glycol divinyl ether; and allyl compounds such as triallylisocyanurate. Preferably, the copolymerizable monomers have functionalities of two or more.

While neither copolymerizable monomers nor inert organic solvents are required to be present, at least one is preferably present in the coating compositions according to the invention. The copolymerizable monomers and inert organic solvents are present in a maximum total amount of 200% by weight, preferably 100% by weight and more preferably 50% by weight, based on resins solids. If present, the minimum combined amount of copolymerizable monomers and inert organic solvents is at least 5% by weight, preferably at least 10% by weight and more preferably at least 15% by weight, based on resin solids.

The coating compositions may be used to coat substrates of any kind, such as wood, plastics, leather, paper, textiles, glass, ceramics, plaster, masonry, metals and concrete. They may be applied by standard methods, such as spray coating, spread coating, flood coating, casting, dip coating, roll coating. The coating compositions may be clear or pigmented lacquers.

After the optional evaporation of a portion or all of any inert solvents used, the coatings may be crosslinked by free radical polymerization by using high-energy radiation, or low energy radiation such as UV or visible light (preferably having a wavelength of at least 320nm, more preferably having a wavelength of about 320 to 500nm), electron beams, γ rays, mercury, xenon, halogen, carbon arc lamps, sunlight, and radioactive sources; by heating to elevated temperatures in the presence of peroxides or azo compounds; or by curing with metal salts of siccative acids and optionally (hydro)peroxides at either elevated temperatures or at temperatures of room temperature or below.

When the coatings are crosslinked by UV irradiation, photoinitiators are added to the coating composition. Suitable photoinitiators are known and include those described in the book by J. Korsar entitled "Light-Sensitive Systems", J. Wiley & Sons, New York - London - Sydney, 1976, and in Houben-Weyl, Methoden der Organischen Chemie, Volume E 20, page 80 et seq, Georg Thieme Verlag, Stuttgart, 1987.

Particularly suitable photoinitiators include benzoin ethers such as benzoin isopropyl ether, benzil ketals such as benzil dimethylketal, and hydroxyalkyl phenones such as 1-phenyl-2-hydroxy-2-methylpropan-1-one. The photoinitiators may be added in amounts, depending upon the application, of 0.1 to 10%, preferably 0.1 to 5% by weight, based on the weight of the ethylenically unsaturated polyurethanes and any other copolymerizable monomers. The photoinitiators may be added individually or may be used as mixtures to obtain advantageous synergistic effects.

To cure the coating compositions at elevated temperatures, curing must be conducted in the presence of 0.1 to 10%, preferably 0.1 to 5% by weight, based on the weight of the ethylenically unsaturated polyurethanes, of initiators such as peroxides or azo compounds. Temperatures of 80 to 240°C, preferably 120 to 160°C, are needed to cure the coating compositions at elevated temperatures.

Suitable initiators include the known free-radical initiators, e.g., aliphatic azo compounds such as azodiisobutyronitrile, azo-bis-2-methyl-valeronitrile, 1,1'-azo-bis-1-cyclohexanenitrile and alkyl 2,2'-azo-bisisobutyrates; symmetrical diacyl peroxides such as acetyl, propionyl or butyryl peroxide, benzoyl peroxides substituted by bromo, nitro, methyl or methoxy groups, and lauryl peroxides; symmetrical peroxydicarbonates such as diethyl, diisopropyl, dicyclohexyl and dibenzoyl peroxydicarbonate; tert-butyl peroxy-2-ethylhexanoate and tert-butyl perbenzoate; hydroperoxides such as tert-butyl hydroperoxide and cumene hydroperoxide; and dialkyl peroxides such as dicumyl peroxide, tert-butyl cumyl peroxide or ditert-butyl peroxide.

The coating compositions according to the invention may also be cured at room temperature in the presence of siccatives and optionally (hydro)peroxides, provided that a portion of the isocyanate groups have been reacted with β,γ-ethylenically unsaturated ether alcohols. Acryloyl groups cannot be cured by this method; however, once the allyl ether groups have been initiated, they can react with the (meth)acryloyl groups.

Suitable siccatives are known and include metal salts, preferably cobalt or vanadium salts, of acids such as linseed oil fatty acids, tall oil fatty acids and soybean oil fatty acids; resinic acids such as abietic acid and naphthenic acid; acetic acid; isooctanoic acid; and inorganic acids such as hydrochloric acid and sulfuric acid. Cobalt and vanadium compounds which are soluble in the coating compositions and act as siccatives are particularly suitable and include salts of the acids mentioned above and also commercial products such as "Vanadiumbeschleuniger VN-2 (Vanadium Accelerator VN-2)" marketed by Akzo. The siccatives are generally used in the form of organic solutions in quantities such that the metal content is 0.0005 to 1.0% by weight, preferably 0.001 to 0.5% by weight, based on the weight of the ethylenically unsaturated polyurethanes.

Examples of (hydro)peroxides include di-tert.-butyl peroxide, benzoyl peroxide, cyclohexanone peroxide, methyl ethyl ketone peroxide, acetyl acetone peroxide, dinonyl peroxide, bis-(4-tert.-butylcyclohexyl)-peroxy-dicarbonate, tert.-butyl hydroperoxide, cumene hydroperoxide, 2,5-dimethyl-hexane-2,5-hydroperoxide and diisopropyl benzene monohydroperoxide. The (hydro)peroxides are preferably used in quantities of 1 to 10% by weight, based on the weight of the ethylenically unsaturated polyurethanes.

When cured in the presence of cobalt and peroxides, the coating compositions generally cure over a period of 1 to 24 hours at 20°C to form high-quality coatings. However, curing may also take place at lower temperatures (for example -5°C) or more quickly at higher temperatures of up to 130°C.

When fully cured (regardless of the type of radiation used), the coatings exhibit hardnesses and impact resistances at least comparable to conventional coatings.

The following examples and comparison examples are intended to illustrate the invention without restricting its scope. All quantities in "parts" and "%" are by weight unless otherwise indicated.

### EXAMPLES

**NTI** - 4-isocyanatomethyl-1,8-octamethylene diisocyanate, NCO content 50.2% and a viscosity ~10 mPa.s at 25°C.
**HDI -** 1,6-diisocyanatohexane, NCO content 50.0%, viscosity <20 mPa.s at 25°C.

### Polyisocyanate 3600

An isocyanurate group-containing polyisocyanate prepared from 1,6-hexamethylene diisocyanate and having an isocyanate content of about 23%, a content of monomeric diisocyanate of <0.25% and a viscosity at 23°C of 1200 mPa.s (available from Bayer Material Science as Desmodur N 3600).

### Polyisocyanate 2410

An isocyanurate and iminooxadiazine dione group-containing polyisocyanate prepared from 1,6-hexamethylene diisocyanate and having an isocyanate content of 23.6%, a content of monomeric diisocyanate of <0.30% and a viscosity at 25°C of 640 mPa.s (available from Bayer Material Science as Desmodur XP 2410).

### Polvisocvanate 2580

An allophanate and isocyanurate group-containing polyisocyanate prepared from 1,6-hexamethylene diisocyanate and having an isocyanate content of 19.4%, a content of monomeric diisocyanate of <0.30% and a viscosity at 25°C of 350 mPa.s (available from Bayer Material Science as Desmodur XP 2580).

### OH-functional Acrylate M 100

A caprolactone-2-hydroxyethyl acrylate adduct which has an OH equivalent weight of 233 (available from Dow as Tone M 100) and corresponds to the formula

CH₂=CH-C(O)O-CH₂-CH₂-(O-C(O)(CH₂)₅)₂-OH.

**HEA** ― hydroxyethyl acrylate

### Example 1 ― (Comparison) ― Preparation of Unsaturated Polyurethane

A three neck flask provided with stirrer, heating mantle and a condenser was charged with about 342 parts (1.91 equivalent) of Polyisocyanate 3600 and about 658 parts (1.91 equivalents) of OH-functional Acrylate M 100. 5 drops of dibutyltin dilaurate were then added and the reaction mixture was allowed to exotherm to 60°C. After about 5 hours, the reaction mixture was allowed to cool to room temperature. The resultant product had an NCO content (as measured by FTIR) of 0.19% by weight and a viscosity of 22,600 mPa.s @ 25°C.

### Examples 2-11 - Preparation of ethylenically unsaturated polyurethanes

A round bottomed flask was charged with one equivalent of polyisocyanate and 0.1 %, based on the weight of the final product, of dibutyltin dilaurate. The flask was equipped with an overhead stirrer, air inlet, thermocouple, temperature controller, heating mantle and condenser. The polyisocyanate was heated to 60°C and then one equivalent of a hydroxy-functional, ethylenically unsaturated compound was incrementally added to the stirred flask with a dry air sparge such that the temperature did not exceed 60°C. After the addition was complete the temperature was maintained at 60°C for two hours until the isocyanate content was less than 0.3% by weight as determined by titration or the NCO peak was no longer evident by FTIR analysis. The polyisocyanates, hydroxy-functional, ethylenically unsaturated compounds, viscosities and the calculated ethylenically unsaturated group contents (C=C, MW 24) of the resulting ethylenically unsaturated polyurethanes are set forth in Table 1.

**TABLE 1**

| Example | Polyisocyanate | Acrylate | Viscosity @ 25°C | Unsaturated Group Content (%, C=C) |
|---|---|---|---|---|
| 1(comp) | 3600 | M 100 | 22,600 | 4.6 |
| 2 | NTI | M 100 | 6,000 | 5.6 |
| 3 | NTI | M 100/HEA (50/50 eq) | 8,800 | 3.8/3.8 |
| 4 | NTI | M 100/HEA (40/60 eq) | 11,710 | 3.3/4.9 |
| 5 | NTI | M 100/HEA (30/70 eq) | 13,825 | 2.7/6.2 |
| 6 | NTI | M 100/HEA (20/80 eq) | 18,950 | 1.9/7.8 |
| 7 | NTI | M 100/HEA (10/90 eq) | 26,400 | 1.1/9.6 |
| 8 (comp) | NTI | HEA | 82,000 | 11.9 |
| 9 (comp) | HDI | M 100 | solid | 5.6 |
| 10 (comp) | 2410 | M 100 | 18,200 | 4.6 |
| 11 (comp) | 2580 | M 100 | 11,000 | 4.3 |

The preceding table demonstrates that the unsaturated polyurethane prepared from NTI and OH functional Acrylate M 100, either alone or blended with hydroxyethyl acrylate, is a low viscosity resin at 25°C (Examples 2-7). The fact that these resins are liquid is surprising when they are compared to an unsaturated polyurethane prepared from HDI, another aliphatic diisocyanate, and OH functional Acrylate M 100 (Example 9). The fact that these resins have such a low viscosity is surprising when the viscosities of the unsaturated polyurethanes from Examples 2-7 are compared to the viscosity of the unsaturated polyurethane prepared from NTI and hydroxyethyl acrylate (Example 8). The viscosities of the unsaturated polyurethanes according to the invention are also lower than the viscosities of unsaturated polyurethanes prepared from other low viscosity polyisocyanates (Examples 1, 10 and 11).

### Examples 12-21 - Coatings prepared from unsaturated polyurethanes

Coatings were prepared from the unsaturated polyurethanes of Examples 1-8, 10 and 11 using the following formulation:
Formulation 1:

| | |
|---|---|
| 65.7 | parts of unsaturated polyurethane |
| 30 | parts of butyl acetate |
| 0.33 | parts of a flow agent (Baysilone OL 44, available from Bayer MaterialScience LLC) |
| 3.3 | parts of 2-hydroxy-2-methyl-1-phenylpropan-1-one diphenyl(2,4,6-trimethylbenzoyl)-phosphine oxide (Darocur 4265, available from Ciba-Geigy) |
| 0.66 | parts of 1-hydroxy-cyclohexyl-phenyl-ketone (Irgacure 184 available from Ciba-Geigy) |

The formulations were drawn down onto glass panels at a wet film thickness of 4 mils and UV cured under a 450 watt bulb at a height of 25.4 cm/4min. The energy provided to cure each coating was measured with a Power Puck 2000 measuring device (available from IET Instrument Markets). The amount of energy is provided in the following table.

| Light Source (Wavelength) | J/Cm² | W/cm² |
|---|---|---|
| UV-A (320 to 390 nm) | 13.12 | 0.065 |
| UV-B (280 to 320 nm) | 0 | 0 |
| UV-C (250 to 260 nm) | 0 | 0.001 |
| Vis. Light (395 to 445 nm) | 6.988 | 0.033 |

The unsaturated polyurethanes used to prepare the coating compositions and the pendulum hardnesses of the resulting coatings are set forth in Table 2.

**TABLE 2**

| Ex. | Unsat. PU from Ex. | Pendulum Hardness (sec) | | | | |
|---|---|---|---|---|---|---|
| | | Initial | 1 days | 5 days | 7 days | 14 days |
| 12 | 1 (comp) | 42 | 22 | 20 | 18 | 18 |
| 13 | 2 | 42 | 29 | 27 | 28 | 27 |
| 14 | 3 | 32 | 35 | - | 48 | 55 |
| 15 | 4 | 87 | 93 | 108 | 95 | 115 |
| 16 | 5 | 113 | 111 | 124 | 128 | 140 |
| 17 | 6 | 97 | 123 | 113 | 103 | 128 |
| 18 | 7 | 144 | 138 | 149 | 145 | 160 |
| 19 | 8 (comp) | 112 | 106 | 114 | - | 112 |
| 20 | 10 (comp) | 42 | 29 | 22 | 24 | 22 |
| 21 | 11 (comp) | 67 | 56 | 48 | 48 | 42 |

The unsaturated polyurethanes used to prepare the coating compositions and the solvent resistances of the resulting coatings are set forth in Table 3.

**TABLE 3**

| Ex. | Unsat. PU from Ex. | MEK Double Rubs | | | | |
|---|---|---|---|---|---|---|
| | | Initial | 1 days | 5 days | 7 days | 14 days |
| 12 | 1 (comp) | 100 | 100 | 100 | 100 | 80 |
| 13 | 2 | 80 | 100 | 100 | 100 | 100 |
| 14 | 3 | 100 | 100 | - | 100 | 100 |
| 15 | 4 | 100 | 100 | 100 | 100 | 100 |
| 16 | 5 | 100 | 100 | 100 | 100 | 100 |
| 17 | 6 | 100 | 100 | 100 | 100 | 100 |
| 18 | 7 | 100 | 100 | 100 | 100 | 100 |
| 19 | 8 (comp) | 100 | 100 | 100 | - | 100 |
| 20 | 10 (comp) | 100 | 100 | 100 | 100 | 100 |
| 21 | 11 (comp) | 40 | 60 | 80 | 60 | 60 |

Tables 2 and 3 demonstrate that coatings prepared the unsaturated polyurethanes according to the invention (Examples 2-7) have hardnesses and solvent resistances that are equal and in most cases better than those for coatings based on the unsaturated polyurethanes prepared from the comparison low viscosity polyisocyanates (Examples 1, 10 and 11).

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A low viscosity, ethylenically-unsaturated polyurethane which is substantially free from isocyanate groups, is liquid at 25°C, has a total content of ethylenically unsaturated groups (calculated as C=C, MW 24) of 1 to 12% by weight and contains the reaction product of
A) 4-isocyanatomethyl-1,8-octamethylene diisoyanate (NTI) with
B) a hydroxyl component comprising
i) 5 to 100 hydroxyl equivalent % of one or more hydroxy-functional lactone ester (meth)acrylates having a number average molecular weight of about 200 to 1000 and having the formula:
CH₂=C(R¹)-C(O)-O-R²-[O-C(O)-R³]ₙ-OH
wherein
n is an integer from 1 to 5,
R¹ is hydrogen or methyl,
R² represents an alkylene group or substituted alkylene group having 2 to 10 carbon atoms, which may be substituted with one or more alkyl groups having from 1 to 12 carbon atoms, and
R³ represents a straight or branched chain alkylene group having 3 to 8 carbon atoms, which may be substituted with one or more alkyl groups having from 1 to 12 carbon atoms,
ii) up to 95 hydroxyl equivalent %, based on the total hydroxyl equivalents of component B), of a monohydroxy-functional, ethylenically unsaturated compound other than B-i), and
iii) up to 20 hydroxyl equivalent %, based on the total hydroxyl equivalents of component B), of a saturated hydroxyl compound or an unsaturated hydroxyl compound other than B-i) or B-ii).,
wherein i) the hydroxyl equivalent %'s of components B-i), B-ii) and B-iii) add up to 100 %, based on the total weights of components Bi), B-ii) and B-iii) and ii) the NCO:OH equivalent ratio of component A) to component B) is 1.10:1 to 1:1.10.

2. The composition of Claim 1 wherein component B-ii) comprises a hydroxyalkyl (meth)acrylate having the formula:
CH₂=CR¹-C(O)O-R²-OH
wherein R¹ and R² are as defined in Claim 1.

3. The composition of Claim 1 wherein component B-i) is present in an amount of 30 to 100 hydroxyl equivalent % and component B-ii) is present in an amount of up to 70 hydroxyl equivalent %, wherein the percentages are based on the total hydroxyl equivalents of component B).

4. The composition of Claim 2 wherein component B-i) is present in an amount of 30 to 100 hydroxyl equivalent % and component B-ii) is present in an amount of up to 70 hydroxyl equivalent %, wherein the percentages are based on the total hydroxyl equivalents of component B).

5. The composition of Claim 1 wherein component B-i) is present in an amount of 50 to 100 hydroxyl equivalent % and component B-ii) is present in an amount of up to 50 hydroxyl equivalent %, wherein the percentages are based on the total hydroxyl equivalents of component B).

6. The composition of Claim 2 wherein component B-i) is present in an amount of 50 to 100 hydroxyl equivalent % and component B-ii) is present in an amount of up to 50 hydroxyl equivalent %, wherein the percentages are based on the total hydroxyl equivalents of component B).

7. The composition of Claim 1 wherein n is 1 or 2, R² is C₂-alkylene, which may be substituted with a methyl group, and R³ is C₅-alkylene.

8. The composition of Claim 2 wherein n is 1 or 2, R² is C₂-alkylene, which may be substituted with a methyl group, and R³ is C₅-alkylene.

9. The composition of Claim 3 wherein n is 1 or 2, R² is C₂-alkylene, which may be substituted with a methyl group, and R³ is C₅-alkylene.

10. The composition of Claim 4 wherein n is 1 or 2, R² is C₂-alkylene, which may be substituted with a methyl group, and R³ is C₅-alkylene.

11. The composition of Claim 5 wherein n is 1 or 2, R² is C₂-alkylene, which may be substituted with a methyl group, and R³ is C₅-alkylene.

12. The composition of Claim 6 wherein n is 1 or 2, R² is C₂-alkylene, which may be substituted with a methyl group, and R³ is C₅-alkylene.

13. The composition of Claim 1 wherein n is 2, R¹ is H, R² is C₂-alkylene, and R³ is C₅-alkylene.

14. The composition of Claim 2 wherein n is 2, R¹ is H, R² is C₂-alkylene, and R³ is C₅-alkylene.

15. The composition of Claim 3 wherein n is 2, R¹ is H, R² is C₂-alkylene, and R³ is C₅-alkylene.

16. The composition of Claim 4 wherein n is 2, R¹ is H, R² is C₂-alkylene, and R³ is C₅-alkylene.

17. The composition of Claim 5 wherein n is 2, R¹ is H, R² is C₂-alkylene, and R³ is C₅-alkylene.

18. The composition of Claim 6 wherein n is 2, R¹ is H, R² is C₂-alkylene, and R³ is C₅-alkylene.

19. A one-component coating composition which comprises the ethylenically unsaturated polyurethane of Claim 1.
